# EUROPEAN PATENT SPECIFICATION

(11) **EP 4 269 958 B1**
(45) Date of publication and mention of the grant of the patent: **24.12.2025**
(21) Application number: 23170473.5
(22) Date of filing: 27.04.2023
(51) Int. Cl.: G01F 23/2962, B64C 3/34, B64D 37/02, B64D 37/30, G01F 23/2965, B60K 15/03

(54) **GUIDED WAVE LIQUID LEVEL MEASUREMENT SYSTEMS AND METHODS**
SYSTEME UND VERFAHREN ZUR MESSUNG DES FLÜSSIGKEITSPEGELS MIT GEFÜHRTEN WELLEN
SYSTÈMES ET PROCÉDÉS DE MESURE DE NIVEAU DE LIQUIDE À ONDES GUIDÉES

(30) Priority: 28.04.2022 US 202217732510
(43) Date of publication of application: 01.11.2023
(73) Proprietor: Simmonds Precision Products, Inc., Vergennes, VT 05491 (US)
(72) Inventor: Bhuiyan, Yeasin, Vergennes (US); Carini, Peter J., Williston (US); Waldo, Page, South Berwick (US)
(74) Representative: Dehns

(56) References cited:
- EP-A1- 3 708 974
- WO-A1-2013/114752
- US-B1- 6 631 639

## Description

### BACKGROUND OF THE INVENTION

### 1. Field of the Invention

The present disclosure relates to liquid level measurement systems and methods, and more particularly to determining aircraft jet fuel quantity in a fuel tank, fuel container, or the like.

### 2. Description of Related Art

Traditional liquid level measurement systems and methods, such as those used for measuring fuel quantity, tend to be invasive, where most of their components are internal to a tank or other receptacle containing a liquid. In certain applications, such as jet fuel applications, this internal arrangement may be subjected to all hazards (corrosiveness, flammability) associated with the jet fuel.

In jet fuel tank applications, traditional liquid level measurement systems and their associated sensors tend to become clogged with the organic substances in the jet fuel. In some cases, existing systems inject electrical energy into the system, which increases the risk of a spark, or unwanted ignition scenario.

The conventional techniques have been considered satisfactory for their intended purpose. However, there is a need for improved liquid level measurement systems and methods having increased reliability. This disclosure provides a solution for this need.

The present invention is characterised over EP3708974, which discloses a fluid level detection apparatus and method utilising a vibrator and vibration sensor. US6631639 discloses a non-invasive system and method for measuring liquid level in a vessel utilising a pair of ultrasonic transducers.

### SUMMARY OF THE INVENTION

According to a first aspect of the present invention, a liquid level measurement system is provided as claimed in claim 1.

In accordance with another aspect of the present invention, a fuel tank assembly is provided as claimed in claim 2.

In accordance with another aspect of the present invention, a method for detecting a liquid level of a receptacle using a liquid level measurement system is provided as claimed in claim 3.

The first group of transmitted guided waves can be independent from the second group of transmitted guided waves. The first group of transmitted guided waves and the second group of transmitted guided waves can include at least one of point-to-point transmitted guided waves, reflected guided waves, refracted guided waves, or a new mode of guided wave.

The first group of transmitted guided waves can include reflected guided waves. Detecting the transmitted guided waves can include detecting the reflected guided waves with the first guided wave sensor array. The first group of transmitted guided waves can include point-to-point transmitted guided waves.
The first group of transmitted guided waves can include refracted guided waves. Detecting the first group of transmitted guided waves can include directly determining the amplitudes of the refracted guided waves into the jet fuel. Determining the jet fuel level in the fuel tank can include determining the jet fuel level by correlating the amplitudes of the detected refracted guided waves. The first group of transmitted guided waves can include a new mode of guided wave.

In some embodiments, the first guided wave sensor array includes a timing element.
The transmitted guided waves can include reflected guided waves. The method can include measuring a time for the reflected guided waves to return to the first guided wave sensor array with the timing element. Determining the liquid level of the liquid receptacle can include determining the liquid level by correlating amplitudes of the detected transmitted guided waves to the liquid level.

In some embodiments, the transmitted guided waves can include reflected guided waves. The method can include determining the amplitudes of the reflected guided waves that returned to the first guided wave sensor array. Determining the liquid level, e.g., jet fuel level, of the liquid receptacle, e.g., the fuel tank, can include determining the jet fuel level by correlating the amplitudes of the detected reflected guided waves.

In some embodiments, the transmitted guided waves can include refracted guided waves. The method can include directly determining the amplitudes of the refracted guided waves into the jet fuel. Determining the jet fuel level in the fuel tank can include determining the jet fuel level by correlating the amplitudes of the detected refracted guided waves.

In some embodiments, the transmitted guided waves can include a new mode of guided wave. The method can include directly measuring the amplitudes of the new mode of guided wave. Determining the jet fuel level in the fuel tank can include determining the jet fuel level by correlating the amplitudes of the new mode of guided wave.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic depiction of an aircraft jet fuel tank assembly having a jet fuel level measurement system constructed in accordance with embodiments of the present disclosure, showing a plurality of receptacles in direct abutment with one another;
Fig. 2 is a schematic depiction of a portion of the jet fuel tank assembly of Fig. 1, showing first and second guided wave sensor arrays;
Fig. 3 is a schematic depiction of another embodiment of a jet fuel tank assembly having a jet fuel level measurement system constructed in accordance with embodiments of the present disclosure, showing transmitted guided waves, point-to-point transmitted guided waves and refracted guided waves;
Fig. 4 is a schematic depiction of another embodiment of a jet fuel tank assembly having a jet fuel level measurement system constructed in accordance with embodiments of the present disclosure, showing transmitted guided waves, reflected guided waves and refracted guided waves;
Fig. 5 is a schematic depiction of a determination chart constructed in accordance with embodiments of the present disclosure, showing the correlation between an amplitude of the refracted wave amplitudes and the jet fuel level;
Fig. 6 is a schematic depiction of another embodiment of a jet fuel tank assembly having a jet fuel level measurement system constructed in accordance with embodiments of the present disclosure, showing transmitted guided waves and new mode of guided wave;
Fig. 7 is a graphical depiction of a determination chart constructed in accordance with embodiments of the present disclosure, showing the correlation between an amplitude of the detected new mode of guided wave and the jet fuel level; and
Fig. 8 is a depiction of a flow chart showing a method to quantify the jet fuel level.

### DETAILED DESCRIPTION OF THE PREFERRED EMBODIMENTS

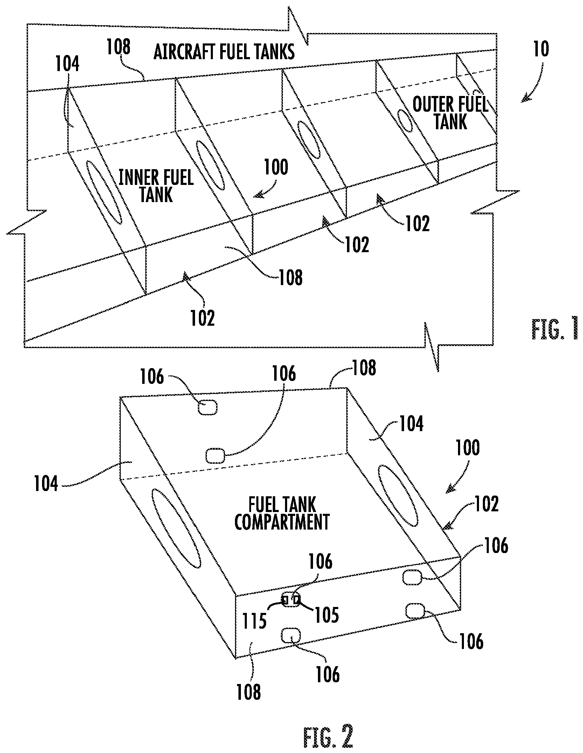

Reference will now be made to the drawings wherein like reference numerals identify similar structural features or aspects of the subject disclosure. For purposes of explanation and illustration, and not limitation, a schematic view of an exemplary embodiment of the liquid level measurement system in accordance with the disclosure is shown in Fig. 1 and is designated generally by reference character 100. Other embodiments of the liquid level measurement systems and methods in accordance with the disclosure, or aspects thereof, are provided in Figs. 2-8 as will be described. The systems and methods described herein can be used to provide non-invasive guided wave (GW) sensing systems.
As shown in Figs. 1-3, a liquid, e.g., jet fuel, level measurement system 100 includes liquid receptacles 102, e.g., fuel compartments 102, as part of a fuel tank assembly 10. It is contemplated that system 100 and methods described herein can be used for a variety of types of jet fuels, e.g., Jet-A, Jet A1, Jet-B, and the like. Detection of the liquid level of fuel tanks is critical for aerospace fuel sensing applications. Fuel compartments 102 can be constructed of an aluminum alloy material, composite material or other similar material. Fuel compartments 102 are bounded by common side walls 104 and exterior walls 108. The liquid level measurement system 100 includes guided wave sensor arrays 106, e.g. a piezoelectric transducer, or the like, coupled to exterior walls 108. Because GW sensor arrays are outside of compartments 102, system 100 is intrinsically safe, since no energy is injected into the tank. Each guided wave sensor array 106 is configured and adapted to emit guided waves 114, i.e. to generate an initial induced guided wave using an emitter portion 105 of sensor array 106 to spawn transmitted waves 118. Each guided wave sensor array is also configured and adapted to receive, i.e. sense, guided waves with a receiver portion 115. Once the waves have been induced/emitted they are considered emitted guided waves 114. Once emitted, they undergo attenuation that differentiates them from the initial induced guided waves generated by sensors 106, then they are considered transmitted waves, e.g. 118, 218, 116, or 216. Ultrasonic guided wave (GW) sensors 106 are coupled to the exterior walls 108. The non-invasive nature of the of ultrasonic guided-wave detection of an internal liquid level based on external GW sensors is a reliability improvement over traditional internally mounted liquid level sensors. A GW sensor array 106 is used to measure the aircraft jet fuel quantity (both volume and mass). The symmetrical, S₀, waves can be induced in the exterior wall 108 of the jet fuel compartment 102. These S₀ guided waves travel through the thickness T of the exterior wall 108 and can recognize the jet fuel surface boundary 110 at the interior surface 112 of the wall 108. The S₀ GW are dispersed differently based on the loading on the interior surface 112 of the jet fuel compartment 102.

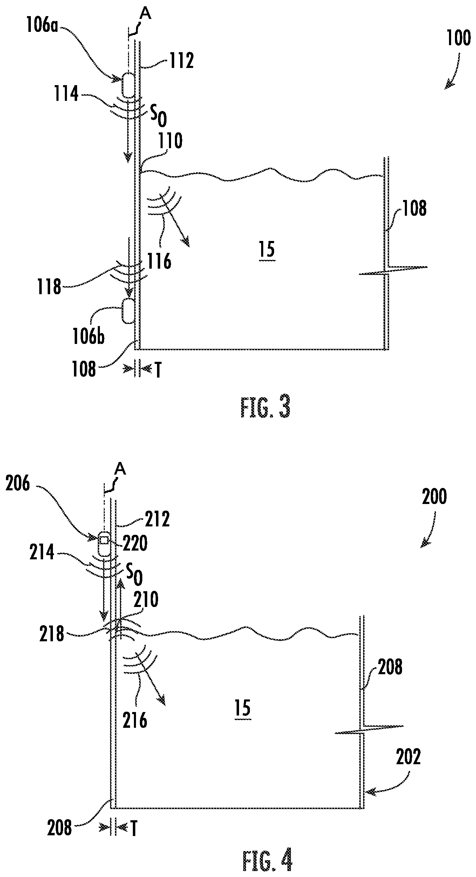

With continued reference to Figs. 1-3, guided waves are emitted from a first GW sensor array 106a (shown in Fig. 3) and generate transmitted waves 118 that may be detected (read) by a second GW sensor array 106b or different sensor arrays, e.g. a "pitch-catch" setting. In this way, it is possible to sense the boundary conditions between the liquid volume and gas volumes in the liquid compartment 102 though monitoring the emergence, and/or both transmissive and reflected attenuation (or lack thereof) of different GW modes and therefore, therefore the fuel quantity can be deduced. GW sensor array 106a is configured and adapted to emit, i.e. induce, guided waves to generate transmitted guided waves 118.

With continued reference to Figs. 1-3, the second GW sensor array 106b is coupled to the exterior wall 108 and spaced apart from the first GW sensor array 106a. The first GW sensor array 106a defines a longitudinal emissions axis A. The second GW sensor array 106b is aligned along the longitudinal emissions axis A with and spaced apart from the first GW sensor array 106a along the longitudinal emissions axis A. The second GW sensor array 106b is configured and adapted to detect point-to-point transmitted guided waves 118, or other attenuated wave, from GW sensor array 106a. When using two or more GW sensor arrays 106a and 106b in a pitch-catch setting, the non-sourcing GW sensor array, in this case GW sensor array 106b, detects the point-to-point transmitted guided waves 118 from GW sensor array 106a. The energy received in GW sensor array 106b from transmitted guided waves 118 is related to the fuel level. The larger and more dispersed the refracted waves are, the smaller the transmitted waves 118 to GW sensor array 106b. This also means that the fuel level is correlated to the transmitted wave energy.

With continued reference to Figs. 1-3, each GW sensor arrays 106a and 106b that are emitting and receiving are installed outside the exterior wall 108, and do not come into contact with the fuel inside compartment 102. This makes it a non-invasive approach of fuel quantity measurement, as compared to traditional jet fuel level measurement systems with ultrasonic emitters and receivers within the liquid compartment, e.g. the jet fuel tank. This is inherently advantageous since the GW sensor arrays 106a and 106b do not have to deal with the hazards associated with the fuel (e.g., corrosiveness, flammability), nor the environmental severity (e.g. cryogenic temperatures) that could reduce sensor reliability. The S₀ waves are less dispersive by nature. At very low frequency, they almost behave like axial waves. This means the wave packets can preserve their shape as they travel long distance, which can be advantageous for data processing.

With continued reference to Figs. 1-3 and 6, the S₀ emitted guided waves 114 propagate through the tank wall 112 at a very high speed (in the order of thousands mph). Fig. 3 schematically shows interactions between the S₀ waves and the jet fuel boundary. The S₀ waves can recognize the jet fuel boundary 110 and undergo changes, e.g. attenuation, as they encounter the jet fuel boundary, e.g. refraction, reflection, new mode. Mode conversion occurs along the solid-liquid interface of the interior surface 112 of the wall 108 and liquid 15. A portion of the S₀ wave is being mode converted into pressure waves (P-waves), e.g. refracted waves 116, and they travel through the jet fuel 15 at a pressure wave speed. The P-waves are refracted into the liquid fuel. Hence, transmitted S₀ waves lose some energy along the tank boundary 110 where the fuel is in contact with the fuel tank. This energy leakage is related to the fuel level in the compartment 102. The higher the fuel level, larger the energy leakage. In some embodiments, S₀ waves (emitted guided waves 114) are transmitted through the tank wall 108.

As shown in Fig. 4, another embodiment of a liquid level measurement system 200 includes a jet fuel compartment 202 bounded by exterior walls 208. Jet fuel level measurement system 200 is similar to system 100 except that a guided wave sensor array 206 operates independently from the other sensor arrays in system 200. Liquid level measurement system 200 can be used in conjunction with system 100 as part of the same fuel tank assembly 10. System 200 is configured to measure the fuel level using standalone guided wave sensor array 206. Guided wave sensor array 206 is set on a pulse-echo setting. GW wave sensor array 206 is configured and adapted to emit guided waves and generate transmitted guided waves 214 (the same waves S₀ described above in the context of system 100) similar to GW sensor array 106a. These transmitted guided waves 214 travel through the thickness T of the exterior wall 208, similar to that described above for wall 108. A portion of S₀ waves is refracted causing refracted guided waves 216 into the jet fuel 15, another portion of the S₀ waves is reflected back causing reflected guided waves 218.

With continued reference to Fig. 4, the reflected guided wave 218 propagate through the exterior wall 208 and come back to the sourcing GW sensor array 206. GW sensor array 206 contains sensing elements which can pick up the reflected waves 218. GW sensor array 206 includes a timing element 220. The timing element 220 is configured to measure a time of flight (TOF) for an emitted guided wave 214 to return as a reflected guided wave 218. The TOF of the reflected waves 218 can be correlated to the empty height of the fuel tank. From the empty height, the jet fuel level in compartment 202 can be deduced. In this way, GW sensor array 206 is used to measure the aircraft fuel quantity (both volume and mass).

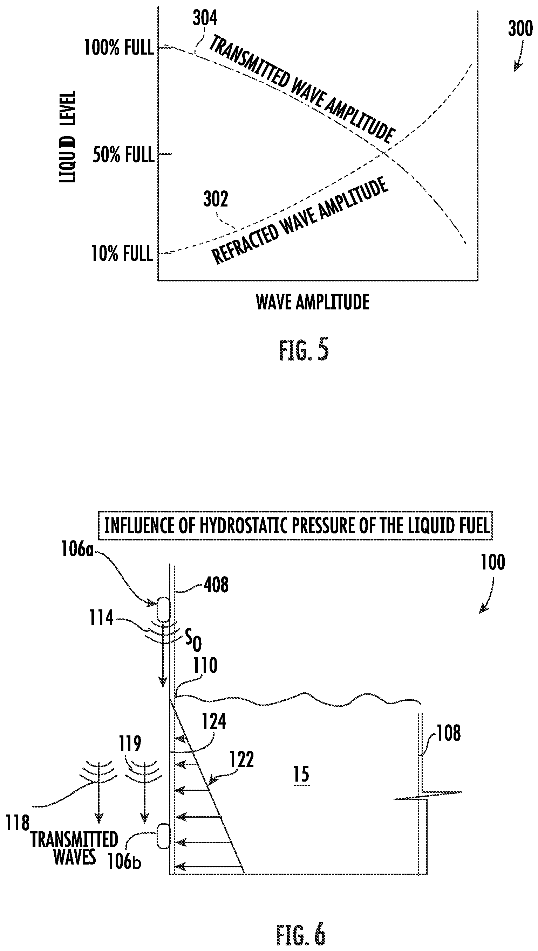

With reference now to Fig. 5, a general trend of the relationship between mode conversion of transmitted guided waves S₀, e.g. transmitted guided waves 118, or 218, and jet fuel level is illustrated by chart 300. The liquid fuel level in a given compartment, e.g., compartments 102, or 202, affects the mode conversion of S₀ waves. As such, a relationship can be obtained between the liquid fuel level and the mode converted waves. Trend line 302 shows the relationship between refracted wave amplitude, e.g. amplitude of refracted waves 116 or 216. As the liquid fuel level rises, the amplitude of the refracted waves increases. The relationship may not be linear because of the complex nature of the wave mode conversion at the solid-liquid interface, e.g., surface boundary 110 or 210. By detecting the point-to-point transmitted wave energy detected by second guided wave sensor array, the amount of refracted wave energy can be inferred. As the refracted wave energy is essentially a loss in the liquid fuel, the transmitted wave energy detected by second guided wave sensor array, e.g., second GW sensor array 106b or 406b, is also affected by that energy loss. The general trend of the transmitted waves, shown by trend line 304, is opposite of the refracted waves. As the fuel level increases, the amplitude of the transmitted waves decreases. The general trend of the transmitted wave is also non-linear because of the complex nature of the wave mode conversion.

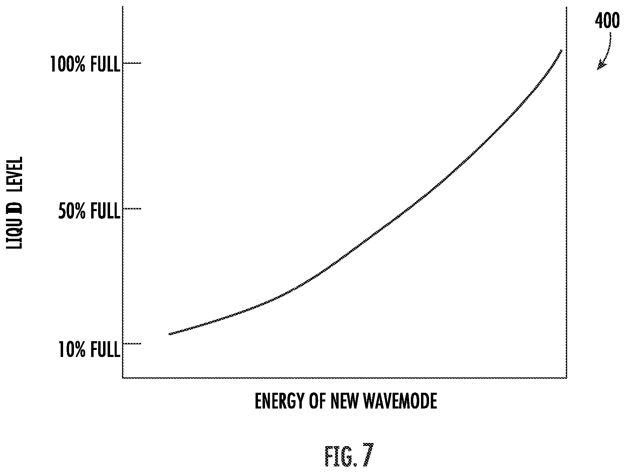

As shown in Fig. 6, the hydrostatic pressure of the liquid fuel, or other liquid, in compartment 102 of liquid level measurement system 100 increases at a given position in the compartment 102 as the liquid level rises. The hydrostatic pressure disrupts the free boundary conditions at the inner boundary 124 of the tank wall 108 with liquid 15. The new hydrostatic pressure boundary condition at the inner surface 124 of the wall 108 may initiate a new wave mode 119 along the tank wall 108. As the fuel level rises, the hydrostatic pressure at a given point along inner surface 124 becomes higher, shown schematically by progressively lengthening arrows 124, which may cause a stronger new wave mode 119. The energy of the new wave mode 119 is also related to the hydrostatic pressure, hence, related to the fuel level. It is expected that the energy of the new wave mode 119 should increase non-linearly as the fuel level rises. A general trend of the relationship between the fuel level and the new wave energy is illustrated in chart 400 of Fig. 7.

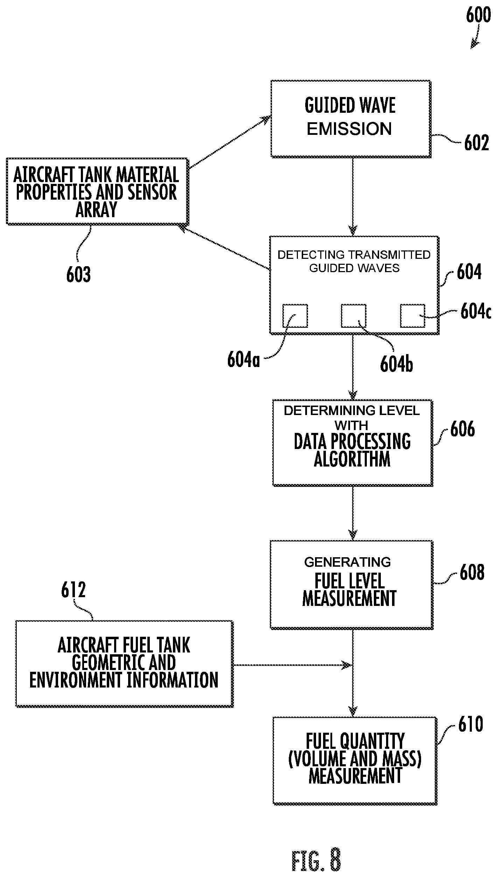

As shown in Fig. 8, a method 600 for detecting a liquid level of a receptacle, e.g. fuel compartment 102 or 202, using a liquid level measurement system, e.g. system 100 or 200, includes emitting guided waves 114 to generate transmitted guided waves, e.g., transmitted guided waves 118 or 218, from a first guided wave sensor array, e.g., guided wave sensor array 106a or 206, a second guided wave sensor array, e.g. second GW sensor array 106b, or both. The emission/excitation is indicated schematically by box 602. Emitting the guided waves generates transmitted guided waves. Emitting the guided waves includes emitting a first group of guided waves with the first guided wave sensor array generating a first group of transmitted guided waves, and emitting a second group of guided waves with the second guided wave sensor array generating a second group of transmitted guided waves.

With continued reference to Fig. 8, the method 600 includes detecting the transmitted guided waves with the first guided wave sensor array, the second guided wave sensor array, or both. The detecting is indicated schematically by box 604 and includes, more specifically, acquiring data about the detected transmitted guided waves from the sensor arrays. The term "transmitted guided waves" is intended to describe any of the waves emitted, e.g. induced, from one of the guided wave sensor arrays undergoing any sort of attenuation or transformation. Transmitted guided waves includes point-to-point transmitted guided waves, e.g. point-to-point transmitted guided waves 118, reflected guided waves, e.g., reflected guided waves 218, refracted guided waves, e.g., refracted guided waves 116 or 216, a new mode of guided wave, e.g., new mode guided waves 119, and/or any other attenuated wave transmitted from one of the guided wave sensor arrays. As such, detecting can include detecting one or more of those wave types with one or more of the guided wave sensor arrays. Detecting includes detecting the first group of transmitted guided waves with the first guided wave sensor array, where the first group of detected transmitted guided waves are a reflected portion of the first group of transmitted guided waves. Detecting includes detecting the second group of transmitted guided waves, where the second group of detected transmitted guided waves are a reflected portion of the second group of transmitted guided waves, with the second guided wave sensor array. In this way, the first and second guided sensor arrays operate independently from one another.

With continued reference to Fig. 8, the first group of transmitted guided waves include point-to-point transmitted guided waves. Detecting the first group of transmitted guided waves includes detecting point-to-point transmitted guided waves with the second guided wave sensor array, as schematically indicated by 604a. It is also contemplated that the first group of transmitted guided waves includes refracted guided waves. The method includes inferring the refracted guided waves with the first group of transmitted guided waves detected by the second guided wave sensor array, as schematically indicated by 604b. It is also contemplated that the first group of transmitted guided waves includes new mode guided waves. Detecting includes detecting the first group of transmitted guided waves by detecting the new mode guided waves with the second guided wave sensor array, as schematically indicated by box 604c. The method includes determining a liquid level of the jet fuel compartment using the detected transmitted guided waves using a data processing algorithm, as indicated schematically by box 606.

Determining the liquid level of the fuel compartment includes determining the jet fuel level by correlating an amplitude of the detected transmitted guided waves to the fuel level. This correlating can be done using a data processing algorithm, as indicated schematically by box 606. The method includes generating a fuel level measurement, as shown schematically b box 608. The method includes investigating the emergence of a new wave mode along the fuel tank. As the fuel level rises, the hydrostatic pressure at the bottom of the tank increases. Fuel level measurement is the key parameter to determine the fuel quantity in the tank. A flow chart and algorithm for fuel quantity measurement is illustrated in Fig. 7. Using the GW sensor, data acquisition software and a data processing algorithm, the fuel level can be generated. The fuel volume can be obtained using the geometry of the fuel tank and the fuel level, the input for which is shown schematically by box 612. The fuel density can be obtained using the temperature and pressure information or any other densitometer device. Obtaining the fuel quantity measurement is shown schematically by box 610. Thus, the fuel mass can be mathematically obtained by using this method 600.

While shown in the context of aircraft fuel compartments and the like, embodiments of the systems and methods described herein are applicable for any ultrasonic guided wave devices used for aircraft liquid measurement. For example, systems and methods described herein can be used in potable water storage and/or fuel quantity sensing for cryogenic liquid hydrogen tanks for aerospace vehicles. It is also contemplated that systems and methods may also be applied to other types of receptacles, such as fuel tubes, pipelines, and other conduits to determine liquid levels. In addition, the methods can also be extended to use for potable water receptacles or any other similar liquid (similar density) as long as the water (and/or liquid) receptacle (vessel, compartment, or the like) is made of same or similar material as the aircraft fuel tank. The methods and systems of the present disclosure, as described above and shown in the drawings, provide for liquid level measurement methods and systems with superior properties including improved reliability and safety due to non-invasive guided wave (GW) sensing. The systems and methods of the present invention can apply to water, oil, liquid nitrogen, liquid hydrogen, or the like. While the apparatus and methods of the subject disclosure have been shown and described with reference to preferred embodiments, those skilled in the art will readily appreciate that changes and/or modifications may be made thereto without departing from the scope of the present invention, which is defined by the claims.

## Claims

1. A liquid level measurement system (100), the system comprising:
a liquid receptacle (102) including a wall (104; 108);
a first guided wave sensor array (106a) coupled to the wall (104; 108), wherein the first guided wave sensor array (106a) is configured and adapted to emit induced guided waves (114); and
a second guided wave sensor array (106b) coupled to the wall (104; 108) and spaced apart from the first guided wave sensor array (106a), wherein the second guided wave sensor array (106b) is aligned with the first guided wave sensor array (106a), and wherein the second guided wave sensor array (106b) is configured and adapted to detect transmitted guided waves (118);
wherein the first guided wave sensor array (106a) defines a longitudinal emissions axis (A), wherein the second guided wave sensor array (106b) is aligned with the longitudinal emissions axis (A) and spaced apart from the first guided wave sensor array (106a) along the longitudinal emissions axis (A), and
**characterized in that** the first guided wave sensor array (106a) and the second guided wave sensor array (106b) are configured and adapted to operate independently from one another;
and wherein the first guided wave sensor array (106a) is configured and adapted to detect reflected guided waves (218) , the first guided wave sensor array (106a) includes a timing element (220), and the timing element (220) is configured and adapted to measure a time for a transmitted guided wave (118) to return as a reflected guided wave (218).

2. A fuel tank assembly (10) having a liquid level measurement system (100) as claimed in claim 1, the assembly comprising:
a plurality of liquid receptacles (102) in direct abutment with one another, wherein each receptacle includes a wall (104; 108); and
wherein said first and second guided wave sensor arrays (106a. 106b) are coupled to at least one of the walls (104; 108).

3. A method for detecting a liquid level of a receptacle (102) using a liquid level measurement system (100), the method comprising:
emitting induced guided waves (114) from a first guided wave sensor array (106a) coupled to a wall (104; 108) of a liquid receptacle (102) thereby generating transmitted guided waves (118);
detecting the transmitted guided waves (118) with at least one of the first guided wave sensor array (106a) or a second guided wave sensor array (106b); and
determining a liquid level of the liquid receptacle (102) using the detected transmitted guided waves (118);
**characterised in that** emitting the guided waves (114) includes emitting a first group of guided waves with the first guided wave sensor array (106a) generating a first group of transmitted guided waves, and emitting a second group of guided waves with the second guided wave sensor array (106b) generating a second group of transmitted guided waves, wherein detecting the first group of transmitted guided waves includes detecting the first group of transmitted guided waves with the first guided wave sensor array (106a), and detecting the second group of transmitted guided waves with the second guided wave sensor array (106b), such that first and second guided sensor arrays operate independently from one another.

4. The method as recited in claim 3, wherein the first group of transmitted guided waves is independent from the second group of transmitted guided waves.

5. The method as recited in claim 3 or 4, wherein the first group of transmitted guided waves and the second group of transmitted guided waves include at least one of point-to-point transmitted guided waves (118), reflected guided waves (218), refracted guided waves (116), or new mode guided waves (119); optionally wherein:
(i) the first group of transmitted guided waves includes reflected guided waves (216), and wherein detecting the transmitted guided waves (118) includes detecting the reflected guided waves (218) with the first guided wave sensor array (106a); or
(ii) the first group of transmitted guided waves includes refracted guided waves (116), and wherein the method further comprising inferring the refracted guide waves (116) from transmitted guided waves (118) detected by the second guided wave sensor array (106b).

6. The method as recited in any one of claims 3-5, wherein the first guided wave sensor array (106a) includes a timing element (220), wherein the transmitted guided waves (118) include reflected guided waves (218), the method comprising measuring a time for the reflected guided waves (218) to return to the first guided wave sensor array (106a) with the timing element (220); and/or
wherein determining the liquid level of the liquid receptacle (102) includes determining the liquid level by correlating an amplitude of the detected transmitted guided waves (118) to the liquid level.

## Patentansprüche

1. System (100) zur Messung des Flüssigkeitspegels, wobei das System Folgendes umfasst:
einen Flüssigkeitsbehälter (102), der eine Wand (104; 108) beinhaltet;
ein erstes Sensorarray (106a) für geführte Wellen, das an die Wand (104; 108) gekoppelt ist, wobei das erste Sensorarray (106a) für geführte Wellen dazu konfiguriert und angepasst ist, induzierte geführte Wellen (114) zu emittieren; und
ein zweites Sensorarray (106b) für geführte Wellen, das an die Wand (104; 108) gekoppelt und von dem ersten Sensorarray (106a) für geführte Wellen beabstandet ist, wobei das zweite Sensorarray (106b) für geführte Wellen an dem ersten Sensorarray (106a) für geführte Wellen ausgerichtet ist und wobei das zweite Sensorarray (106b) für geführte Wellen dazu konfiguriert und angepasst ist, übertragene geführte Wellen (118) zu erfassen;
wobei das erste Sensorarray (106a) für geführte Wellen eine Längsemissionsachse (A) definiert, wobei das zweite Sensorarray (106b) für geführte Wellen an der Längsemissionsachse (A) ausgerichtet und von dem ersten Sensorarray (106a) für geführte Wellen entlang der Längsemissionsachse (A) beabstandet ist, und
**dadurch gekennzeichnet, dass** das erste Sensorarray (106a) für geführte Wellen und das zweite Sensorarray (106b) für geführte Wellen dazu konfiguriert und angepasst sind, unabhängig voneinander zu funktionieren;
und wobei das erste Sensorarray (106a) für geführte Wellen dazu konfiguriert und angepasst ist, reflektierte geführte Wellen (218) zu erfassen, das erste Sensorarray (106a) für geführte Wellen ein Zeitmesselement (220) beinhaltet und das Zeitmesselement (220) dazu konfiguriert und angepasst ist, eine Zeit zu messen, die eine übertragene geführte Welle (118) benötigt, um als reflektierte geführte Welle (218) zurückzukehren.

2. Kraftstofftankbaugruppe (10), die ein System (100) zur Messung des Flüssigkeitspegels nach Anspruch 1 aufweist, wobei die Baugruppe Folgendes umfasst:
eine Vielzahl von Flüssigkeitsbehältern (102), die direkt aneinander anliegen, wobei jeder Behälter eine Wand (104; 108) beinhaltet; und
wobei das erste und das zweite Array (106a. 106b) für geführte Wellen an mindestens eine der Wände (104; 108) gekoppelt sind.

3. Verfahren zum Erfassen eines Flüssigkeitspegels eines Behälters (102) unter Verwendung eines Systems (100) zur Messung des Flüssigkeitspegels, wobei das Verfahren Folgendes umfasst:
Emittieren von induzierten geführten Wellen (114) von einem ersten Array (106a) für geführte Wellen, das an eine Wand (104; 108) eines Flüssigkeitsbehälters (102) gekoppelt ist, wodurch übertragene geführte Wellen (118) erzeugt werden;
Erfassen der übertragenen geführten Wellen (118) mit mindestens einem von dem ersten Sensorarray (106a) für geführte Wellen oder einem zweiten Sensorarray (106b) für geführte Wellen; und
Bestimmen eines Flüssigkeitspegels in dem Flüssigkeitsbehälter (102) unter Verwendung der erfassten übertragenen geführten Wellen (118);
**dadurch gekennzeichnet, dass** das Emittieren der geführten Wellen (114) Emittieren einer ersten Gruppe von geführten Wellen mit dem ersten Sensorarray (106a) für geführte Wellen, das eine erste Gruppe von übertragenen geführten Wellen erzeugt, und Emittieren einer zweiten Gruppe von geführten Wellen mit dem zweiten Sensorarray (106b) für geführte Wellen, das eine zweiten Gruppe von übertragenen geführten Wellen erzeugt, beinhaltet, wobei das Erfassen der ersten Gruppe von übertragenen geführten Wellen Erfassen der ersten Gruppe von übertragenen geführten Wellen mit dem ersten Sensorarray (106a) für geführte Wellen und Erfassen der zweiten Gruppe von übertragenen geführten Wellen mit dem zweiten Sensorarray (106b) für geführte Wellen beinhaltet, sodass das erste und das zweite Sensorarray für geführte Wellen unabhängig voneinander funktionieren.

4. Verfahren nach Anspruch 3, wobei die erste Gruppe von übertragenen geführten Wellen von der zweiten Gruppe von übertragenen geführten Wellen unabhängig ist.

5. Verfahren nach Anspruch 3 oder 4, wobei die erste Gruppe von übertragenen geführten Wellen und die zweite Gruppe von übertragenen geführten Wellen mindestens eines von Punkt-zu-Punkt übertragenen geführten Wellen (118), reflektierten geführten Wellen (218), gebrochenen geführten Wellen (116) oder geführten Wellen (119) in neuem Modus beinhalten; wobei optional:
(i) die erste Gruppe von übertragenen geführten Wellen reflektierte geführte Wellen (216) beinhaltet, und wobei das Erfassen der übertragenen geführten Wellen (118) Erfassen der reflektierten geführten Wellen (218) mit dem ersten Sensorarray (106a) für geführte Wellen beinhaltet; oder
(ii) die erste Gruppe von übertragenen geführten Wellen gebrochene geführte Wellen (116) beinhaltet, und wobei das Verfahren ferner Ableiten der gebrochenen geführten Wellen (116) aus den übertragenen geführten Wellen (118) umfasst, die durch das zweite Sensorarray (106b) für geführte Wellen erfasst werden.

6. Verfahren nach einem der Ansprüche 3-5, wobei das erste Sensorarray (106a) für geführte Wellen ein Zeitmesselement (220) beinhaltet, wobei die übertragenen geführten Wellen (118) reflektierte geführte Wellen (218) beinhalten, wobei das Verfahren Messen einer Zeit mit dem Zeitmesselement (220) umfasst, welche die reflektierten geführten Wellen (218) benötigen, um zu dem ersten Sensorarray (106a) für geführte Wellen zurückzukehren; und/oder
wobei das Bestimmen des Flüssigkeitspegels des Flüssigkeitsbehälters (102) Bestimmen des Flüssigkeitspegels durch Korrelieren einer Amplitude der erfassten übertragenen geführten Wellen (118) mit dem Flüssigkeitspegel beinhaltet.

## Revendications

1. Système de mesure de niveau de liquide (100), le système comprenant :
un récipient (102) de liquide comportant une paroi (104 ; 108) ;
un premier réseau de capteurs à ondes guidées (106a) accouplé à la paroi (104 ; 108), dans lequel le premier réseau de capteurs à ondes guidées (106a) est configuré et adapté pour émettre des ondes guidées (114) induites ; et
un second réseau de capteurs à ondes guidées (106b) accouplé à la paroi (104 ; 108) et espacé du premier réseau de capteurs à ondes guidées (106a), dans lequel le second réseau de capteurs à ondes guidées (106b) est aligné avec le premier réseau de capteurs à ondes guidées (106a), et dans lequel le second réseau de capteurs à ondes guidées (106b) est configuré et adapté pour détecter des ondes guidées transmises (118) ;
dans lequel le premier réseau de capteurs à ondes guidées (106a) définit un axe d'émission longitudinal (A), dans lequel le second réseau de capteurs à ondes guidées (106b) est aligné avec l'axe d'émission longitudinal (A) et espacé du premier réseau de capteurs à ondes guidées (106a) le long de l'axe d'émission longitudinal (A), et
**caractérisé en ce que** le premier réseau de capteurs à ondes guidées (106a) et le second réseau de capteurs à ondes guidées (106b) sont configurés et adaptés pour fonctionner indépendamment l'un de l'autre ;
et dans lequel le premier réseau de capteurs à ondes guidées (106a) est configuré et adapté pour détecter des ondes guidées réfléchies (218), le premier réseau de capteurs à ondes guidées (106a) comporte un élément de chronométrage (220), et l'élément de chronométrage (220) est configuré et adapté pour mesurer une durée nécessaire à une onde guidée transmise (118) pour revenir sous forme d'onde guidée réfléchie (218).

2. Ensemble réservoir carburant (10) présentant un système de mesure de niveau de liquide (100) selon la revendication 1, l'ensemble comprenant :
une pluralité de récipients de liquide (102) en butée directe les uns contre les autres, dans lequel chaque récipient comporte une paroi (104 ; 108) ; et
dans lequel lesdits premier et second réseaux de capteurs à ondes guidées (106a. 106b) sont accouplés à au moins l'une des parois (104 ; 108).

3. Procédé de détection d'un niveau de liquide d'un récipient (102) à l'aide d'un système de mesure de niveau de liquide (100), le procédé comprenant :
l'émission d'ondes guidées (114) induites à partir d'un premier réseau de capteurs à ondes guidées (106a) accouplé à une paroi (104 ; 108) d'un récipient de liquide (102), générant ainsi des ondes guidées transmises (118) ;
la détection des ondes guidées transmises (118) avec au moins l'un du premier réseau de capteurs à ondes guidées (106a) et d'un second réseau de capteurs à ondes guidées (106b) ; et
la détermination du niveau de liquide du récipient de liquide (102) à l'aide des ondes guidées transmises (118) détectées ;
**caractérisé en ce que** l'émission des ondes guidées (114) comporte l'émission d'un premier groupe d'ondes guidées à l'aide du premier réseau de capteurs à ondes guidées (106a) qui génère un premier groupe d'ondes guidées transmises, et l'émission d'un second groupe d'ondes guidées à l'aide du second réseau de capteurs à ondes guidées (106b) qui génère un second groupe d'ondes guidées transmises, dans lequel la détection du premier groupe d'ondes guidées transmises comporte la détection du premier groupe d'ondes guidées transmises à l'aide du premier réseau de capteurs à ondes guidées (106a), et la détection du second groupe d'ondes guidées transmises à l'aide du second réseau de capteurs à ondes guidées (106b), de sorte que des premier et second réseaux de capteurs à ondes guidées fonctionnent indépendamment l'un de l'autre.

4. Procédé selon la revendication 3, dans lequel le premier groupe d'ondes guidées transmises est indépendant du second groupe d'ondes guidées transmises.

5. Procédé selon la revendication 3 ou 4, dans lequel le premier groupe d'ondes guidées transmises et le second groupe d'ondes guidées transmises comportent au moins l'une parmi une onde guidée transmise (118) point à point, une onde guidée réfléchie (218), une onde guidée réfractée (116), ou une onde guidée de nouveau mode (119) ; optionnellement, dans lequel :
(i) le premier groupe d'ondes guidées transmises comporte des ondes guidées réfléchies (216), et dans lequel la détection des ondes guidées transmises (118) comporte la détection des ondes guidées réfléchies (218) à l'aide du premier réseau de capteurs à ondes guidées (106a) ; ou
(ii) le premier groupe d'ondes guidées transmises comporte des ondes guidées réfractées (116), et dans lequel le procédé comprenant en outre la déduction des ondes guidées réfractées (116) à partir des ondes guidées transmises (118) détectées par le second réseau de capteurs à ondes guidées (106b).

6. Procédé selon l'une quelconque des revendications 3 à 5, dans lequel le premier réseau de capteurs à ondes guidées (106a) comporte un élément de chronométrage (220), dans lequel les ondes guidées transmises (118) comportent des ondes guidées réfléchies (218), le procédé comprenant la mesure d'une durée nécessaire aux ondes guidées réfléchies (218) pour revenir au premier réseau de capteurs à ondes guidées (106a) à l'aide de l'élément de chronométrage (220) ; et/ou
dans lequel la détermination du niveau de liquide du récipient (102) de liquide comporte la détermination du niveau de liquide en corrélant une amplitude des ondes guidées transmises (118) détectées au niveau de liquide.
